# EUROPÄISCHE PATENTSCHRIFT

(11) **EP 3 532 720 B1**
(45) Veröffentlichungstag und Bekanntmachung des Hinweises auf die Patenterteilung: **19.05.2021**
(21) Anmeldenummer: 17790764.9
(22) Anmeldetag: 25.10.2017
(51) Int. Cl.: F02G 5/02, F02C 6/00

(54) **SYSTEM MIT EINEM SEKUNDÄREN STROMERZEUGUNGSAGGREGAT ZUR NACHVERSTROMUNG VON ABGASWÄRME EINES PRIMÄREN STROMERZEUGUNGSAGGREGATS**
SYSTEM HAVING A SECONDARY CURRENT GENERATING ASSEMBLY FOR THE SECONDARY CONVERSION INTO ELECTRICITY OF EXHAUST GAS HEAT FROM A PRIMARY CURRENT GENERATING ASSEMBLY
SYSTÈME COMPRENANT UN GROUPE ÉLECTROGÈNE SECONDAIRE POUR RÉGÉNÉRER LA CHALEUR DES GAZ D'ÉCHAPPEMENT D'UN GROUPE ÉLECTROGÈNE PRIMAIRE

(30) Priorität: 31.10.2016 DE 102016120764
(43) Veröffentlichungstag der Anmeldung: 04.09.2019
(73) Patentinhaber: Konecranes Global Corporation, 05830 Hyvinkää (FI)
(72) Erfinder: BAUER, Reinhard, 97280 Remlingen (DE)
(74) Vertreter: Moser Götze & Partner Patentanwälte mbB
(86) Internationale Anmeldenummer: PCT/EP2017/077335
(87) Internationale Veröffentlichungsnummer: WO 2018/077963

(56) Entgegenhaltungen:
- EP-B1- 2 759 509
- DE-A1-102015 215 518
- DE-T2- 69 738 474
- US-A1- 2010 146 968
- US-A1- 2011 209 473

## Beschreibung

Die Erfindung betrifft ein Fahrzeug zum Handhaben von Frachtcontainern gemäß dem Oberbegriff von Anspruch 1.

Aus der europäischen Patentschrift EP 2 759 509 B1 ist ein Portalhupstapler mit einem Hybridantrieb bekannt, der neben einem elektrischen Generator einen Verbrennungsmotor für Gas oder Diesel umfasst. Dem Hybridantrieb ist eine sogenannte Electrical Turbo Compound (ETC)-Anlage nachgeschaltet, um Abgasenergie des Verbrennungsmotors nachzuverstromen. Die ETC-Anlage beinhaltet neben einer Abgasturbine zur Generierung mechanischer Energie aus der Abgasenergie einen Generator zur Erzeugung elektrischer Energie, der mit dem Abgasstrom mechanisch zur Umwandlung der Rotationsenergie in elektrische Energie gekoppelt ist. Die Abgasturbine ist über eine Abgasleitung mit dem Verbrennungsmotor verbunden, wodurch es zu unerwünschten Rückwirkungen auf den Hybridantrieb, insbesondere auf den Verbrennungsmotor und dessen Abgasanlage, kommen kann.

Des Weiteren ist aus der europäischen Patentanmeldung EP 1 925 492 A2 ein Portalhubstapler mit einem emissions- und wartungsarmen Turbinenantrieb bekannt. Es kommt eine handelsübliche Mikroturbine, wie sie bisher in stationären kleinen Blockheizkraftwerken mit Kraft-Wärme-Kopplung eingesetzt wird, als primäres Stromerzeugungsaggregat in dem Portalhubstapler mit Hybridantrieb zum Einsatz. Deren elektrischer Wirkungsgrad ist mit weniger als 30 % geringer als der eines primären Stromerzeugungsaggregates mit Dieselmotor und damit ist auch ihr Kraftstoffverbrauch höher. Eine Verbesserung des elektrischen Wirkungsgrades kann durch eine nachgeschaltete sekundäre Abgasturbine beziehungsweise ETC-Anlage, welche die Abgasenergie nachverstromt, erreicht werden. Jedoch kann es zu unerwünschten, leistungsmindernden Rückwirkungen auf die primäre Mikroturbine wegen des Abgas-Gegendruckes kommen, so dass sich im Endeffekt kaum Wirkungsgradverbesserungen ergeben.

Aus der deutschen Offenlegungsschrift DE 10 2008 025 426 A1 ist eine Wärmekraftmaschine mit Turbine und Kompressor für die Erzeugung mechanischer

Energie aus Restwärme von heißen Abgasen bekannt. Die beschriebene Wärmekraftmaschine weist einen der Turbine nachgeschalteten Kühler auf, der durch Abkühlung des heißen Abgases ein Druckgefälle herstellt. Mit diesem Druckgefälle wird die Turbine angetrieben. Die Turbine treibt ihrerseits einen zur Aufrechterhaltung des Druckgefälles benötigten Kompressor an, der über eine Welle mechanisch mit der Turbine verbunden ist. Die Leistungsabgabe der Turbine ist größer als die vom Kompressor benötigte Leistung. Dadurch wird von der Turbine ein Leistungsüberschuss generiert, der einen Gewinn an mechanischer Energie darstellt. Die Erzeugung elektrischer Energie aus dieser mechanischen Energie ist nicht vorgesehen.

Die japanische Offenlegungsschrift JP 2009 215 906 A betrifft eine Vorrichtung zur Rückgewinnung von Abgaswärme, welche derart leicht und platzsparend ausgeführt ist, dass diese auch in Autos eingebaut werden kann. Es werden Abgase eines Motors zu einer Turbine geleitet, dort auf einen Druck unterhalb des Atmosphärendrucks expandiert und dann zum Abkühlen zu einem Wärmetauscher geleitet. Über einen Kompressor wird das abgekühlte und im Unterdruck befindliche Gas wieder auf Atmosphärendruck gebracht und dadurch Energie gewonnen. Abgasturbine, Generator und Verdichter befinden sich dabei auf einer gemeinsamen Welle.

Für Automobile und Lokomotiven ist aus der US 2010/0146968 A1 ein System mit einem primären Stromerzeugungsaggregat und mit einem sekundären Stromerzeugungsaggregat zur Nachverstromung von Abgaswärme des primären Stromerzeugungsaggregats bekannt. Hierbei sind in dem Abgasstrom hinter der Abgasturbine ein Abgaskühler und dahinter ein Verdichter angeordnet. Ähnliche Systeme sind auch aus der US 2011/0209473 A1, der DE 697 38 474 T2 und DE 10 2015 215 518 A1 bekannt.

Die CH 705 180 A1 offenbart ein Verfahren zur Effizienzsteigerung eines Antriebs sowie eine Effizienzsteigerungsvorrichtung für Blockheizkraftwerke.

Es ist eine Aufgabe der vorliegenden Erfindung ein Fahrzeug zum Handhaben von Frachtcontainern mit einem System mit einem eine primäre Wärmekraftmaschine umfassenden primären Stromerzeugungsaggregat und mit einem sekundären Stromerzeugungsaggregat, insbesondere einer elektrischen Turbo-Compound-Anlage, zur Nachverstromung von Abgaswärme des primären Stromerzeugungsaggregats derart weiterzuentwickeln, dass dessen Wirkungsgrad verbessert, insbesondere dessen Brennstoffverbrauch weiter reduziert ist. Hiermit einher geht eine Emissionsverbesserung.

Diese Aufgabe wird durch ein Fahrzeug mit den Merkmalen des Anspruchs 1 gelöst. Vorteilhafte Ausgestaltungen sind in den abhängigen Ansprüchen 2 bis 7 angegeben.

Erfindungsgemäß wird bei einem Fahrzeug zum Handhaben von Frachtcontainern mit einem System mit einem eine primäre Wärmekraftmaschine umfassenden primären Stromerzeugungsaggregat und mit einem sekundären Stromerzeugungsaggregat, insbesondere einer elektrischen Turbo-Compound-Anlage, zur Nachverstromung von Abgaswärme des primären Stromerzeugungsaggregats, wobei das sekundäre Stromerzeugungsaggregat eine in einem Abgasstrom der primären Wärmekraftmaschine angeordnete Abgasturbine umfasst und die Abgasturbine einen elektrischen sekundären Generator antreibt, eine Reduzierung des Brennstoffverbrauchs dadurch erreicht, dass in dem Abgasstrom hinter der Abgasturbine ein Abgaskühler gefolgt von einem Verdichter angeordnet sind, der Verdichter von einem Elektromotor angetrieben ist und die Drehzahlen für Verdichter und Abgasturbine von einem Prozessregelsystem gesteuert sind, wobei ein sekundärer Wechselrichter dem sekundären Generator zugeordnet ist, ein Frequenzumrichter dem Elektromotor des Verdichters zugeordnet ist und der sekundäre Wechselrichter und der Frequenzumrichter über einen Feldbus mit einer elektronischen Zentralsteuerung in Kommunikationsverbindung stehen, wobei die elektronische Zentralsteuerung ein Steuern der Energieflüsse des primären Stromerzeugungsaggregats und des sekundären Stromerzeugungsaggregats ermöglicht und das primäre Stromerzeugungsaggregat und das sekundäre Stromerzeugungsaggregat mindestens einen Fahrantrieb und mindestens einen Hubantrieb mit Energie versorgen. Die Abgaswärme des primären Stromerzeugungsaggregats geht nicht nutzlos verloren. Die Abgaswärme wird genutzt, um Sekundärenergie zu gewinnen. Der Gesamtwirkungsgrad des Systems ist erhöht. Der Brennstoffverbrauch und damit der Abgasausstoß des Portalhubstaplers sind reduziert. Ein derartiges System kann besonders umweltfreundlich betrieben werden. Das sekundäre Stromerzeugungsaggregat kann immer im optimalen Arbeitspunkt mit bestmöglicher Energieausbeute aus der Abgaswärme betrieben werden und sich an die ändernden Betriebszustände der Wärmekraftmaschine automatisch anpassen. Auch können bisher bekannte ETC-Anlagen oft nur unzureichend geregelt und an die sich ändernden Betriebszustände der primären Wärmekraftmaschine und deren Abgassystem, wie beispielsweise Abgasturbolader, Abgasnachbehandlungsanlage (SCR), Abgasrückführung, Rußpartikelfilter usw. angepasst werden. Auch wird vorteilhafter Weise insgesamt erreicht, dass das sekundäre Stromerzeugungsaggregat keine ungünstigen Rückwirkungen auf die Abgasanlage oder die Leistung der primären Wärmekraftmaschine hat.

Vorteilhaft ist vorgesehen, dass die Drehzahlen für Verdichter und Abgasturbine von dem Prozessregelsystem derart gesteuert sind, dass im Abgasstrom am Eingang der Abgasturbine Umgebungsdruck herrscht. Das sekundäre Stromerzeugungsaggregat wirkt nicht beispielsweise durch Gegendruck auf die primäre Wärmekraftmaschine zurück. Die bisher bekannten ETC-Anlagen haben meistens den Nachteil, dass die Druckdifferenz, welche sich über der nachgeschalteten Turbine aufbaut, einen Gegendruck auf das Abgassystem der primären Wärmekraftmaschine erzeugt und sich damit leistungsmindernd auswirkt.

Entsprechender Weise werden die Drehzahlen für Verdichter und Abgasturbine von dem Prozessregelsystem derart gesteuert, dass im Abgasstrom am Ausgang der Abgasturbine Unterdruck herrscht. Hierdurch wird die Leistung der primären Wärmekraftmaschine durch das nachgeschaltete sekundäre Stromerzeugungsaggregat nicht vermindert. Auch wird die Abgasnachbehandlung und Abgasreinigung der primären Wärmekraftmaschine nicht durch das sekundäre Stromerzeugungsaggregat beeinflusst. Daher kann das sekundäre Stromerzeugungsaggregat nachträglich noch an die schon in Betrieb befindliche primäre Wärmekraftmaschine angebaut werden, ohne dass an der primären Wärmekraftmaschine WKM etwas geändert oder neu abgestimmt werden muss.

Vorteilhafter Weise ist vorgesehen, dass das sekundäre Stromerzeugungsaggregat nach dem Inverted Brayton Cycle (IBC) arbeitet. Gegenüber einer ORC-Anlage (Organic Rankine Cycle) zur Abwärme-Nachverstromung weist das erfindungsgemäße sekundäre Stromerzeugungsaggregat in Form der elektrischen Turbo-Compound (ETC) Anlage, die nach dem Inverted Brayton Cycle (IBC) arbeitet, weniger Komponenten auf und ist damit kostengünstiger. Außerdem kann das sekundäre Stromerzeugungsaggregat aus handelsüblichen Komponenten aufgebaut werden.

Erfindungsgemäß ist auch vorgesehen, dass der sekundäre Generator und damit die Abgasturbine von dem Prozessregelsystem drehzahlverstellbar ist und der Verdichter über den Elektromotor und das Prozessregelsystem drehzahlverstellbar ist. Somit muss das sekundäre Stromerzeugungsaggregat nicht für jedes vorgegebene primäre Stromerzeugungsaggregat, insbesondere primäre Wärmekraftmaschine, speziell ausgelegt und konstruiert werden, sondern kann weitestgehend aus handelsüblichen Standardkomponenten aufgebaut sein und über die Drehzahlverstellung in weiten Bereichen der jeweiligen primären Wärmekraftmaschine angepasst werden. Außerdem kann das sekundäre Stromerzeugungsaggregat zur Nachverstromung von Abgaswärme optimal geregelt werden im Sinne einer optimalen Anpassung an die momentanen Betriebszustände der primären Wärmekraftmaschine und deren Abgasnachbehandlungsanlage.

Bevorzugt ist die primäre Wärmekraftmaschine als Kolbenmotor oder Turbine ausgebildet. Hierbei wird vorteilhaft für die primäre Wärmekraftmaschine tiefkaltes, verflüssigtes Erdgas (LNG) als Brennstoff verwendet. Auch andere Kraftstoffe, wie beispielsweise Autogas (LPG) oder Dieselkraftstoff, sind möglich. Der Kolbenmotor im Sinne dieser Anmeldung kann also ein Gasmotor oder ein handelsüblicher Dieselmotor sein. Als Gasmotor im Sinne dieser Anmeldung ist ein Verbrennungsmotor zu verstehen, der eine nach dem Otto-Prozess arbeitende Verbrennungskraftmaschine ist, wobei gasförmiger Kraftstoff wie beispielsweise Erdgas, Flüssiggas, Holzgas, Biogas, Deponiegas, Grubengas, Gichtgas oder Wasserstoff verwendet wird. Als Gasmotor wird aber auch eine Gasturbine verstanden, die insbesondere einen Verdichter, eine Brennkammer und eine Turbine oder einen Expander aufweist. Eine derartige Gasturbine beruht auf dem Wirkungsprinzip des Kreisprozesses. In mindestens einer Verdichterstufe wird Luft mit einem Gas zu einem Verbrennungsgemisch und in der Brennkammer gezündet und verbrannt. Das durch die Verbrennung entstandene Heißgas wird in einem Turbinenteil entspannt, sodass thermische Energie in mechanische Energie umgewandelt werden kann. Wesentlich ist also, dass Energie aus einem Verbrennungsprozess, zu dem zumindest anteilig Gas eingesetzt wird, in mechanische Energie umgewandelt wird. Die mechanische Energie kann anschließend einem Generator zugeführt werden, um elektrische Primär-Energie zu erzeugen.

Erfindungsgemäß ist auch ein sekundärer Wechselrichter dem sekundären Generator zugeordnet, ein Frequenzumrichter dem Elektromotor des Verdichters zugeordnet und der sekundäre Wechselrichter und der Frequenzumrichter stehen über einen Feldbus mit einer elektronischen Zentralsteuerung in Kommunikationsverbindung. Der regelbare sekundäre Wechselrichter des sekundären Generators und der regelbare Frequenzumrichter des Elektromotors des Verdichters erlauben es, jeweils die Spannung und den Einspeisestrom, mithin also auch das Lastmoment und die Drehzahl der Abgasturbine und des Verdichters auf bestimmte geforderte Sollwerte zu regeln.

Außerdem ermöglicht eine elektronische Zentralsteuerung ein Steuern der Energieflüsse des primären Stromerzeugungsaggregats und des sekundären Stromerzeugungsaggregats.

Das erfindungsgemäße Fahrzeug mit einem vorbeschriebenen System mit einem sekundären Stromerzeugungsaggregat zur Nachverstromung von Abgaswärme eines primären Stromerzeugungsaggregats ist als Fahrzeug zum Handhaben von Frachtcontainern ausgebildet und ist bevorzugt ein Hafenkran, ein Hafenmobilkran, ein gummibereifter Portalkran oder Portalhubstapler. Hierbei wird von dem primären Stromerzeugungsaggregat und dem sekundären Stromerzeugungsaggregat mindestens ein Fahrantrieb und mindestens ein Hubantrieb mit Energie versorgt.

Nachfolgend wird ein Ausführungsbeispiel der Erfindung anhand der Zeichnung näher erläutert. Es zeigen:
Figur 1 eine perspektivische Ansicht eines erfindungsgemäßen Portalhubstaplers und
Figur 2 ein schematisches Schaltbild eines elektrischen Antriebsstranges eines Portalhubstaplers gemäß Figur 1.

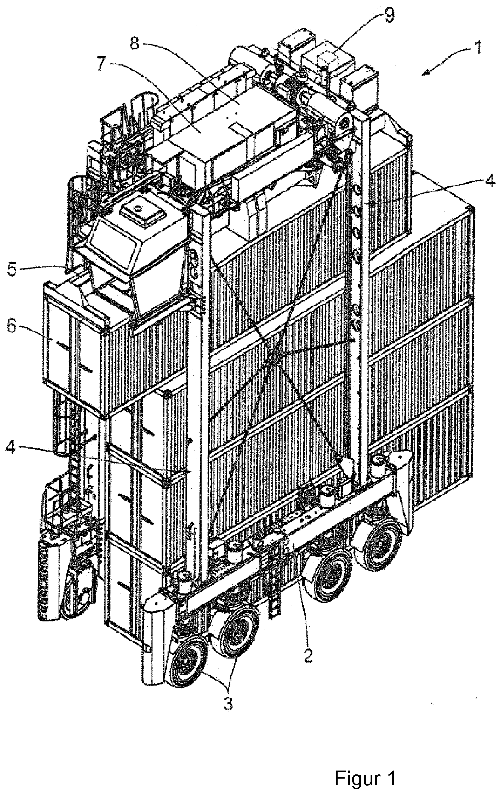

In der Figur 1 ist ein erfindungsgemäßer Portalhubstapler 1, der auch Straddle Carrier oder Van Carrier genannt wird, in einer perspektivischen Ansicht dargestellt. Der Portalhubstapler 1 umfasst zwei entlang einer Fahrrichtung des Portalhubstaplers 1 orientierte Fahrwerksträger 2, an welchen jeweils vier Einzelräder 3 angeordnet sind. Die Fahrwerksträger 2 sind parallel zueinander und in einer gemeinsamen Horizontalebene angeordnet. An einer den Rädern 3 abgewandten Oberseite sind die beiden Fahrwerksträger 2 durch zwei im Wesentlichen U-förmige Portalrahmen 4 miteinander verbunden. Die Portalrahmen 4 sind in einer Vorwärtsfahrtrichtung des Portalhubstaplers 1 gesehen an einem vorderen Ende der Fahrwerksträger 2 und an einem hinteren Ende der Fahrwerksträger 2 angeordnet beziehungsweise aufgestellt. Der Portalhubstapler 1 weist einen innerhalb der beiden Portalrahmen 4 und an den beiden Portalrahmen 4 geführten, vertikal heb- und senkbaren Spreader 5 auf. Der Spreader 5 dient im Sinne eines Lastaufnahmemittels zum Handhaben eines Frachtcontainers 6. Der Portalhubstapler 1 und insbesondere die Portalrahmen 4 sind derart ausgelegt, dass der Portalhubstapler 1 mit einem gehobenen Container 6 bis zu drei am Boden befindliche, übereinander gestapelte Container 6 überfahren kann.

Zur Erzeugung von elektrischer Primärenergie, die für ein Betreiben des Portalhubstaplers 1 erforderlich ist, ist ein primäres Stromerzeugungsaggregat 10 vorgesehen. Das erste Stromerzeugungsaggregat 10 ist gemäß dem gezeigten Ausführungsbeispiel oberhalb einer von den beiden Portalrahmen 4 definierten Oberseite angeordnet. Das primäre Stromerzeugungsaggregat 10 umfasst eine primäre Wärmekraftmaschine 7 in Form einer Turbine oder eines Verbrennungsmotors, insbesondere Dieselmotors, und einen damit verbundenen primären Generator 8 zum Umwandeln der von der Wärmekraftmaschine 7 erzeugten Energie in elektrische Energie. Weiterhin ist ein rein schematisch dargestelltes sekundäres Stromerzeugungsaggregat 9 in Form einer elektrischen Turbo-Compound-Anlage (ETC-Anlage) vorgesehen. Das sekundäre Stromerzeugungsaggregat 9 ist mit der primären Wärmekraftmaschine 7 verbunden und dient zum Nachverstromen von Abgaswärme, die von dem primären Stromerzeugungsaggregat 10, insbesondere von der Wärmekraftmaschine 7 und/oder dem Generator 8, zur Erzeugung der elektrischen Primärenergie in Form von Wechsel- oder Drehstrom anfällt.

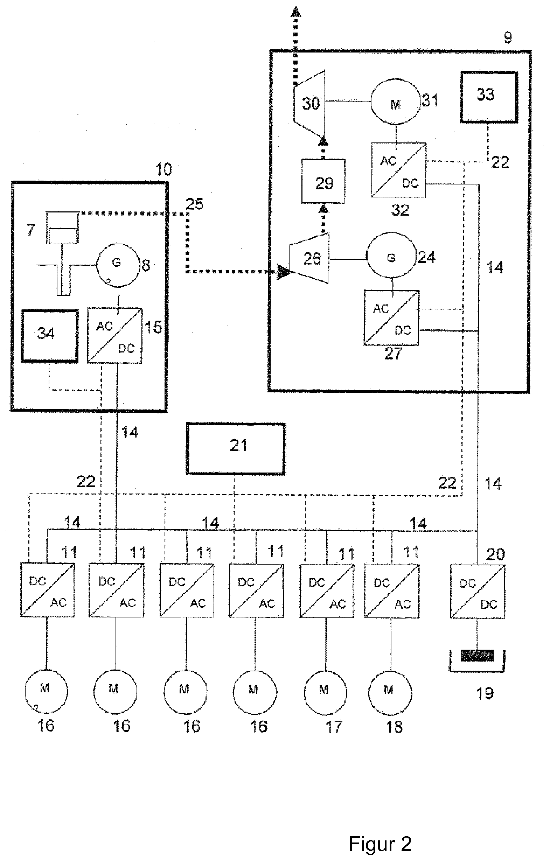

In der Figur 2 ist ein schematisches Schaltbild eines elektrischen Antriebsstranges des Portalhubstaplers 1 dargestellt, der im Wesentlichen ein primäres Stromerzeugungsaggregat 10, ein sekundäres Stromerzeugungsaggregat 9 zur Nachverstromung der Abwärme des primären Stromerzeugungsaggregats 10, elektrische Verbraucher in Form von Fahrwerksantrieben 16, Hubwerksantrieben 17 und Hilfsantrieben 18 und optional zusätzliche Energiespeicher 19 umfasst. Das als Ganzes mit 10 bezeichnete primäre Stromerzeugungsaggregat umfasst die primäre Wärmekraftmaschine 7 sowie den daran angeschlossenen primären Generator 8. Der primäre Generator 8 erzeugt Wechsel-/Drehstrom, der über einen im Gleichrichtermodus betriebenen primären Wechselrichter 15 als Gleichstrom für einen Gleichspannungs-Zwischenkreis 14 zur Verfügung gestellt wird. Der Gleichspannungs-Zwischenkreis 14 ist als durchgezogene Linie dargestellt. Gleichzeitig ist der primäre Wechselrichter 15 über einen als gestrichelte Linie dargestellten Feldbus 22, der insbesondere als CAN-Bus ausgeführt ist, mit einer elektronischen Zentralsteuerung 21, insbesondere Rechner oder speicherprogrammierbare Steuerung (SPS), des Portalhubstaplers 1 verbunden. Die elektronische Zentralsteuerung 21 ermöglicht ein Leistungs- und Energiespeicher-Management des Portalhubstaplers 1. Über den Feld-Bus 22 ist die elektronische Zentralsteuerung 21 mit weiteren Wechselrichtern 11 verbunden, die jeweils die Fahrwerksantriebe 16, einen Hubwerksantrieb 17 und einen weiteren Hilfsantrieb 18 mit elektrischer Energie aus dem Gleichspannungs-Zwischenkreis 14 versorgen. Die weiteren Wechselrichter 11 sind entsprechend über den Gleichspannungszwischenkreis 14 miteinander sowie mit dem primären Wechselrichter 15 des primären Stromerzeugungsaggregats 10 und mit einem sekundären Wechselrichter 27 des sekundären Stromerzeugungsaggregats 9 verbunden.

Ebenfalls über den Gleichspannungszwischenkreis 14 mit dem primären Wechselrichter 15 des primären Stromerzeugungsaggregats 10 ist ein Lade/Entladeregler 20, insbesondere ein Hoch/Tiefsetzsteller oder DC/DC-Wandler, verbunden, der zum Steuern und Überwachen des Energiespeichers 19 dient. Der Energiezwischenspeicher 19 kann beispielsweise als Doppelschichtkondensator (Supercaps, Ultracaps), Batterie oder Schwungradspeicher, um Bremsenergien zu rekuperieren, ausgebildet sein. Eine gleichmäßige Auslastung des primären Stromerzeugungsaggregats 10 kann trotz starker Leistungsschwankungen der Fahrwerksantriebe 16 und des Hubantriebs 17 beispielsweise dadurch gewährleistet werden, dass diese Energiespitzen in dem Energiespeicher 19 gepuffert und dadurch abgedämpft werden. Dadurch ist es möglich, dass das primäre Stromerzeugungsaggregat 10 eine im Wesentlichen ausgeglichene und insbesondere gleichmäßige, kontinuierliche elektrische Leistung bei im Wesentlichen konstanter Drehzahl in den Gleichspannungs-Zwischenkreis 14 einspeisen kann. Die von dem primären Stromerzeugungsaggregat 10 erzeugte Abwärme wird gleichmäßig an das sekundäre Stromerzeugungsaggregat 9 abgegeben. Dadurch sind Schwankungen bei der Energiezufuhr für den Betrieb des sekundären Stromerzeugungsaggregats 9 reduziert. Ein optimaler Betrieb für das sekundäre Stromerzeugungsaggregat 9 ist möglich.

Durch den Betrieb des primären Stromerzeugungsaggregats 10, insbesondere durch den Betrieb der primären Wärmekraftmaschine 7, wird Abwärme produziert, die durch die gepunktete Linie als Abgasstrom der Wärmekraftmaschine 25 in Figur 2 symbolhaft dargestellt ist. Erfindungsgemäß wird der Abwärmestrom der Wärmekraftmaschine 7 in Form eines Abgasstroms zur Nachverstromung dem sekundären Stromerzeugungsaggregat 9 zugeführt.

Das sekundäre Stromerzeugungsaggregat 9 ist eine ETC-Anlage, bei der eine Abgasturbine 26 hinter einem Abgastrakt - dargestellt als Abgasstrom 25 - der primären Wärmekraftmaschine 7 angeordnet ist, und an deren Turbinenwelle ausgangsseitig getriebelos ein hochdrehender sekundärer Generator 24 zur Erzeugung von Strom angekoppelt ist.

Derart hochdrehende Generatoren 24 können beispielsweise einen speziell konstruierten Rotor aufweisen, der mit Permanentmagneten bestückt ist, über die eine Hülse aus Kohlefaserwerkstoff gespannt wird. Dadurch ist sichergestellt, dass die Hülse den Rotor auch bei sehr hohen Fliehkräften in Folge der hohen Antriebsdrehzahlen sicher zusammenhält. Die hohen Stromfrequenzen eines derart hochdrehenden Generators 24 bewirken hohe Spannungsabfälle an dessen Reaktanzen. Es ist möglich, elektrische Kondensatoren in den Ausgangsleitungen des Generators zur Verfügung zu stellen, um diese Spannungsabfälle, zumindest größtenteils, zu kompensieren.

Die Abgasturbine 26 kann beispielsweise direkt an einem Abgas-Endrohr der Wärmekraftmaschine 7, die in dem Ausführungsbeispiel als Hubkolbenmotor ausgebildet, also hinter einen eventuell vorhandenen Abgasturbolader, einer Abgasnachbehandlungsanlage und einem Schalldämpfer des Hubkolbenmotors im Abgasstrom 25 angeordnet sein. Der sekundäre Generator 24 erzeugt Wechsel- oder Drehstrom, welcher von einem generatorisch betriebenen, regelbaren sekundären Wechselrichter 27 gleichgerichtet und in einen Gleichspannungs-Zwischenkreis 14 des Portalhubstaplers 1 für dessen elektrische Hauptantriebe, insbesondere Fahrantriebe 6, Hubantriebe 7 und etwaige Hilfsantriebe 8 wie beispielsweise Kühlerpumpen, Lüfter, Klimageräte oder Heizungen, eingespeist wird. Der regelbare Wechselrichter 27 erlaubt es, die Spannung und den Einspeisestrom, mithin also auch das Lastmoment und die Drehzahl der Abgasturbine 26 auf bestimmte geforderte Sollwerte zu regeln, die von einem Prozessregelsystem 33 der ETC-Anlage dem sekundären Wechselrichter 27 des sekundären Generators 24 vorgegeben werden. Hierzu ist das Prozessregelsystem 33 über einen Feldbus 22 mit dem sekundären Wechselrichter 27 des sekundären Generators 14 verbunden. Hinter der Abgasturbine 26 ist ein Abgaskühler 29 nachgeschaltet. Die Abkühlung der Gase erzeugt einen Unterdruck und somit ein Druckgefälle über die Abgasturbine 26, so dass diese mechanische Arbeit am sekundären Generator 24 verrichten kann. Hinter dem Abgaskühler 29 hält ein Verdichter 30 den Unterdruck der abgekühlten Gase aufrecht, indem er die Gase wieder auf Atmosphärendruck komprimiert und in die Umgebung ableitet. Dieser Prozess wird bekanntlich als inverser Gasturbinenprozess oder Inverted Brayton Cycle (IBC) bezeichnet. Wegen des subatmosphärischen Unterdrucks von etwa 0,5 bar der gekühlten Gase hinter der Abgasturbine 26 kann diese mit einem Eingangsdruck von ungefähr atmosphärischem Umgebungsdruck, d.h. etwa 1 bar, betrieben werden. Da die gesamte primäre Wärmekraftmaschine 7 einschließlich ihrer kompletten Abgasanlage von vornherein vom Hersteller auf einen solchen Umgebungsdruck von etwa 1 bar als Auslassdruck hinter ihrem Abgas-Endrohr ausgelegt ist, gibt es keine Rückwirkungen auf das primäre Stromerzeugungsaggregat 10 und seine Abgasbehandlung. Der Verdichter 30 wird von einem drehzahlverstellbaren Elektromotor 31 angetrieben. Dieser wird aus dem Gleichspannungs-Zwischenkreis 14 gespeist über einen regelbaren Frequenzumrichter 22. Die elektrische Leistungsaufnahme des Elektromotors 31 des Verdichters 30 ist geringer als die Leistungsabgabe des Turbinengenerators 24, weil bei gleicher Druckdifferenz der vom Verdichter 30 zu fördernde Volumenstrom der abgekühlten Gase geringer ist als der Volumenstrom der heißen Gase durch die Turbine 26. Der Leistungsüberschuss des sekundären Generators 24 gegenüber der Leistungsaufnahme des Elektromotors 31 des Verdichters 30 ergibt den Gewinn an elektrischer Energie aus der Abgaswärme. Die Drehzahl-Sollwerte für die Abgasturbine 26 und für den Verdichter 30 werden von dem elektronischen Prozessregler 33 vorgegeben, welcher beispielsweise digital als Industrierechner oder speicherprogrammierbare Steuerung (SPS) mit eigens dafür entwickelter Regelungssoftware ausgeführt sein kann. Das Prozessregelsystem 33 der ETC-Anlage steht über den Feldbus 22, der beispielsweise als CAN-Bus ausgebildet sein kann, in Kommunikationsverbindung mit dem sekundären Wechselrichter 27 und dem Frequenzumrichter 32 der Abgasturbine 26 und des Verdichters 30 und auch mit einem elektronischen Steuer- und Regelsystem 34 der primären Wärmekraftmaschine 7, deren momentane Betriebszustandsgrößen, wie beispielsweise Drehzahl, Drehmoment, Leistung, Betriebszustand der Abgasanlage, auf den Feldbus 22 übertragen werden. Das Prozessregelsystem 33 erhält außerdem Signale von Druck- und Temperatursensoren, die im Abgasstrom 25 vor und hinter der Abgasturbine 26 angebracht sind.

Wie zuvor beschrieben, sinken bei der Entspannung der Abgase in der Abgasturbine 26 sowohl Druck auch als Temperatur der Abgase. Eingangsseitig prallen die Gasmoleküle mit hoher Geschwindigkeit auf Schaufeln der Abgasturbine 26 und geben dabei kinetische Energie an die Schaufeln ab, welche dann als mechanische Energie an der Turbinenwelle zur Verfügung steht. Die Gasmoleküle verlieren dabei Geschwindigkeit, was mit einer Temperaturerniedrigung einhergeht und es damit zu einer Minderung des Wärmeenergieinhaltes der Abgase kommt. Somit kann die mit dem erfindungsgemäßen System vorgenommene Nachverstromung von Abgasenergie auch im Sinne einer Nachverstromung von Abgaswärme verstanden werden.

Die Prozessregelung des IBC-Prozesses dieser ETC-Anlage kann mit dem Prozessregelsystem 33 folgendermaßen erfolgen:
Die Drehzahl der Abgasturbine 26 wird vom Prozessregelsystem 33 so eingestellt, dass der Eingangsdruck der Abgasturbine 26 möglichst konstant bei etwa bei 1 bar bleibt. Neben dem gemessenen Druck-Istwert von einem Eingangsdrucksensor wird hierzu auch der momentane Betriebszustand, bestimmt beispielsweise anhand von Drehzahl, Drehmoment und/oder Auslastung der primären Wärmekraftmaschine 7, in den Drehzahl-Sollwert für die Abgasturbine 26 geeignet eingerechnet. Die Drehzahl des Verdichters 30 wird vom Prozessregelsystem 33 so eingestellt, dass der sensorisch gemessene Ausgangsdruck der Abgasturbine 26 auf einem gewünschten, subatmosphärischen, optimalen Sollwert gehalten wird. Dieser optimale Unterdruck-Sollwert wird bestimmt aus der gemessenen Eintrittstemperatur an der Abgasturbine 26. Je höher die Eintrittstemperatur, umso niedriger sollte der Unterdruck hinter der Abgasturbine 26 sein. Die Drehzahl des Verdichters 30 wird zusätzlich noch dem momentanen Betriebszustand der primären Wärmekraftmaschine 7 und der momentanen Drehzahl der Abgasturbine 26 angepasst. Die entsprechenden Regelkennlinien können beispielsweise experimentell bei Testläufen gemessen werden und der Regelungssoftware des Prozessregelsystems 33 einprogrammiert werden. Insgesamt werden die Drehzahlen von Abgasturbine 26 und Verdichter 30 jeweils so geregelt, dass maximale elektrische Nettoleistung von der ETC-Anlage in den Gleichspannungs-Zwischenkreises 14 eingespeist wird und dabei kein Gegendruck auf den Abgasstrom 25 der Abgasanlage der primären Wärmekraftmaschine 7 zurückwirkt.

Besonders vorteilhaft ist es für den IBC-Prozess, wenn die Abgase durch den Abgaskühler 29 auf möglichst niedrige Temperaturen abgekühlt werden, denn dann ist der zu fördernde Gasvolumenstrom für den Verdichter 30 und damit der Energieverbrauch des Elektromotors 31 des Verdichters 30 gering und damit auch die Nettoleistung der ETC-Anlage hoch. Wenn beispielsweise die primäre Wärmekraftmaschine 7 mit tiefkaltem, verflüssigtem Erdgas (LNG) als Kraftstoff betrieben wird, der durch Erwärmung erst in den gasförmigen Zustand verdampft werden muss, kann das durch den Abgaskühler 29, der als Wärmetauscher für die LNG-Verdampfung gebaut sein kann, geschehen. Damit werden die Abgase auf besonders tiefe Temperaturen abgekühlt und die Energieausbeute aus den Abgasen ist besonders hoch.

Die steuerungs- und regelungstechnische Integration des sekundären Stromerzeugungsaggregats 9 in ein, insbesondere bereits vorhandenes, Antriebssystem des Portalhubstaplers 1 erfolgt dadurch, dass der sekundäre Wechselrichter 27 und/oder das Prozessregelsystem 33 des sekundären Stromerzeugungsaggregats 9 über den Feldbus 22 mit weiteren Komponenten des Antriebssystems, insbesondere mit der elektronischen Zentralsteuerung 21, kommuniziert. Die Kommunikationsverbindung mittels einem als CAN-Bus ausgebildeten Feldbus 22 kann vorteilhaft nach der internationalen Norm SAE J1939 und nach dem DRIVE COM-Standard erfolgen. Über den Feldbus 22 wird die von dem sekundären Generator 24 eingespeiste Stromstärke, insbesondere die eingespeiste elektrische Leistung, und insbesondere weitere Istwerte, welche beispielsweise von nicht dargestellten Sensoren in dem sekundären Wechselrichter 28 erfasst werden, sowie Zustandssignale wie betriebsbereit oder Störung des Portalhubstaplers 1 an die elektronische Zentralsteuerung 21 übertragen.

Eine in der elektronischen Zentralsteuerung 21 implementierte Software wertet diese Signale und Istwerte des sekundären Stromerzeugungsaggregats 9 automatisch aus und beeinflusst damit Sollwerte und Steuersignale für die Fahrwerksantriebe 16, den Hubwerksantrieb 17 und die Hilfsantriebe 18 und insbesondere für das primäre Stromerzeugungsaggregat 10. Die implementierte Software kann eine Powermanagement-Software zur Energieflusssteuerung in der elektronischen Zentralsteuerung 21 sein. Die Powermanagement-Software bilanziert rechnerisch die von den beiden Stromerzeugungsaggregaten 9, 10 momentan verfügbare elektrische Einspeiseleistung mit der von den Verbrauchern, also den Fahrwerksantrieben 16, dem Hubwerksantrieb 17 und den Hilfsantrieben 18, im momentanen Betriebszustand geforderten Leistung. Gleichzeitig begrenzt die Powermanagement-Software, insbesondere ebenfalls über den Feldbus 22, die Sollwerte für die Antriebe 16, 17 und 18 derart, dass die Stromerzeugungsaggregate 9, 10 nicht überlastet werden und die Gleichspannung im Gleichspannungs-Zwischenkreis 14 nicht zusammenbricht. Dabei kann es vorteilhaft sein, wenn bei den Fahrantrieben 16 das Soll-Drehmoment und bei dem Hubantrieb 17 die Soll-Drehzahl begrenzt ist. Weiterhin kann die Powermanagement-Software auch Sollwerte für das Laden und/oder Entladen der Energiespeicher 19 derart strategisch steuern, dass Brems- und Senkenergien zwischengespeichert und rekuperiert werden. Darüber hinaus können Leistungsspitzen abgepuffert werden, so dass die beiden Stromerzeugungsaggregate 9, 10 gleichmäßig und insbesondere ohne große Leistungsschwankungen belastet werden.

### Bezugszeichenliste

1 Portalhubstapler
2 Fahrwerksträger
3 Einzelrad
4 Portalrahmen
5 Spreader
6 Frachtcontainer
7 primäre Wärmekraftmaschine
8 primärer Generator
9 sekundäres Stromerzeugungsaggregat
10 primäres Stromerzeugungsaggregat
11 weitere Wechselrichter
14 Gleichspannungs-Zwischenkreis
15 primärer Wechselrichter
16 Fahrwerksantriebe
17 Hubwerksantriebe
18 Hilfsantriebe
19 Energiespeicher
20 Lade/Entladeregler
21 elektronische Zentralsteuerung
22 Feldbus
24 sekundärer Generator
25 Abgasstrom
26 Abgasturbine
27 sekundärer Wechselrichter
29 Abgaskühler
30 Verdichter
31 Elektromotor
32 Frequenzumrichter
33 Prozessregelsystem
34 Steuer- und Regelsystem

## Patentansprüche

1. Fahrzeug zum Handhaben von Frachtcontainern mit einem System mit einem eine primäre Wärmekraftmaschine (7) umfassenden primären Stromerzeugungsaggregat (10) und mit einem sekundären Stromerzeugungsaggregat (9), insbesondere einer elektrischen Turbo-Compound-Anlage, zur Nachverstromung von Abgaswärme des primären Stromerzeugungsaggregats (10), wobei das sekundäre Stromerzeugungsaggregat (9) eine in einem Abgasstrom (25) der primären Wärmekraftmaschine (7) angeordnete Abgasturbine (26) umfasst und die Abgasturbine (26) einen elektrischen sekundären Generator (24) antreibt, **dadurch gekennzeichnet, dass** in dem Abgasstrom hinter der Abgasturbine (26) ein Abgaskühler (29) gefolgt von einem Verdichter (30) angeordnet sind, der Verdichter (30) von einem Elektromotor (31) angetrieben ist und die Drehzahlen für Verdichter (30) und Abgasturbine (26) von einem Prozessregelsystem (33) gesteuert sind, wobei ein sekundärer Wechselrichter (27) dem sekundären Generator (24) zugeordnet ist, ein Frequenzumrichter (32) dem Elektromotor (31) des Verdichters (30) zugeordnet ist und der sekundäre Wechselrichter (27) und der Frequenzumrichter (32) über einen Feldbus (22) mit einer elektronischen Zentralsteuerung (21) in Kommunikationsverbindung stehen, wobei die elektronische Zentralsteuerung (21) ein Steuern der Energieflüsse des primären Stromerzeugungsaggregats (10) und des sekundären Stromerzeugungsaggregats (9) ermöglicht und das primäre Stromerzeugungsaggregat (10) und das sekundäre Stromerzeugungsaggregat (9) mindestens einen Fahrantrieb (16) und mindestens einen Hubantrieb (17) mit Energie versorgen, wobei der sekundäre Generator (24) von dem Prozessregelsystem (33) drehzahlverstellbar ist und wobei der Verdichter (30) über den Elektromotor (31) und das Prozessregelsystem (33) drehzahlverstellbar ist.

2. Fahrzeug nach Anspruch 1, **dadurch gekennzeichnet, dass** die Drehzahlen für Verdichter (30) und Abgasturbine (26) von dem Prozessregelsystem (33) derart gesteuert sind, dass im Abgasstrom (25) am Eingang der Abgasturbine (26) Umgebungsdruck herrscht.

3. Fahrzeug nach Anspruch 1 oder 2, **dadurch gekennzeichnet, dass** die Drehzahlen für Verdichter (30) und Abgasturbine (26) von dem Prozessregelsystem (33) derart gesteuert sind, dass im Abgasstrom (25) am Ausgang der Abgasturbine (26) Unterdruck herrscht.

4. Fahrzeug nach mindestens einem der Ansprüche 1 bis 3, **dadurch gekennzeichnet, dass** das sekundäre Stromerzeugungsaggregat (9) nach dem Inverted Brayton Cycle (IBC) arbeitet.

5. Fahrzeug nach mindestens einem der Ansprüche 1 bis 4, **dadurch gekennzeichnet, dass** die primäre Wärmekraftmaschine (7) als Kolbenmotor oder Turbine ausgebildet ist.

6. Fahrzeug nach Anspruch 5, **dadurch gekennzeichnet, dass** die primäre Wärmekraftmaschine (7) tiefkaltes, verflüssigtes Erdgas (LNG) als Brennstoff verwendet.

7. Fahrzeug nach mindestens einem der Ansprüche 1 bis 6, **dadurch gekennzeichnet, dass** das Fahrzeug ein Hafenkran, ein Hafenmobilkran, ein gummibereifter Portalkran oder Portalhubstapler (1) ist.

## Claims

1. Vehicle for handling freight containers having a system having a primary current generating assembly (10), comprising a primary thermal engine (7), and having a secondary current generating assembly (9), in particular an electric turbo compound installation, for secondary conversion into electricity of exhaust gas heat of the primary current generating assembly (10), wherein the secondary current generating assembly (9) comprises an exhaust gas turbine (26), disposed in an exhaust gas stream (25) of the primary thermal engine (7), and the exhaust gas turbine (26) drives a secondary electric generator (24), **characterised in that**, in the exhaust gas stream, an exhaust gas cooler (29) followed by a compressor (30) is disposed behind the exhaust gas turbine (26), the compressor (30) is driven by an electric motor (31) and the rotational speeds for the compressor (30) and exhaust gas turbine (26) are controlled by a process regulating system (33), wherein a secondary inverter (27) is allocated to the secondary generator (24), a frequency converter (32) is allocated to the electric motor (31) of the compressor (30) and the secondary inverter (27) and the frequency converter (32) are communicatively connected via a field bus (22) to an electronic central controller (21), wherein the electronic central controller (21) permits control of the energy flows of the primary current generating assembly (10) and of the secondary current generating assembly (9), and the primary current generating assembly (10) and the secondary current generating assembly (9) supply at least one travel drive (16) and at least one lifting drive (17) with energy, wherein the rotational speed of the secondary generator (24) can be adjusted by the process regulating system (33) and wherein the rotational speed of the compressor (30) can be adjusted by the electric motor (31) and the process regulating system (33).

2. Vehicle as claimed in claim 1, **characterised in that** the rotational speeds for the compressor (30) and exhaust gas turbine (26) are controlled by the process regulating system (33) in such a way that ambient pressure prevails in the exhaust gas stream (25) at the input of the exhaust gas turbine (26).

3. Vehicle as claimed in claim 1 or 2, **characterised in that** the rotational speeds for the compressor (30) and exhaust gas turbine (26) are controlled by the process regulating system (33) in such a way that negative pressure prevails in the exhaust gas stream (25) at the output of the exhaust gas turbine (26).

4. Vehicle as claimed in at least one of claims 1 to 3, **characterised in that** the secondary current generating assembly (9) operates according to the inverted Brayton cycle (IBC).

5. Vehicle as claimed in at least one of claims 1 to 4, **characterised in that** the primary thermal engine (7) is designed as a piston engine or turbine.

6. Vehicle as claimed in claim 5, **characterised in that** the primary thermal engine (7) uses cryogenic liquified natural gas (LNG) as fuel.

7. Vehicle as claimed in at least one of claims 1 to 6, **characterised in that** the vehicle is a harbour crane, a mobile harbour crane, a rubber tyre-borne gantry crane or a gantry lift stacker (1).

## Revendications

1. Véhicule destiné à la manutention de conteneurs de fret et comprenant un système pourvu d'une unité de production de courant primaire (10) comprenant un moteur thermique primaire (7) et d'une unité de production de courant secondaire (9), en particulier d'une installation turbo-combinée électrique destinée à transformer ensuite en courant électrique la chaleur de gaz d'échappement de l'unité de production de courant primaire (10), l'unité de production de courant secondaire (9) comprenant une turbine à gaz d'échappement (26) disposée dans un flux de gaz d'échappement (25) du moteur thermique primaire (7) et la turbine à gaz d'échappement (26) entraînant un générateur électrique secondaire (24), **caractérisé en ce que** un refroidisseur de gaz d'échappement (29) suivi d'un compresseur (30) est disposé en aval de la turbine à gaz d'échappement (26) par référence au flux de gaz d'échappement, le compresseur (30) est entraîné par un moteur électrique (31) et les vitesses de rotation du compresseur (30) et de la turbine à gaz d'échappement (26) sont commandées par un système de régulation de processus (33), un onduleur secondaire (27) étant associé au générateur secondaire (24), un convertisseur de fréquence (32) étant associé au moteur électrique (31) du compresseur (30) et l'onduleur secondaire (27) et le convertisseur de fréquence (32) étant en communication avec une commande centrale électronique (21) par le biais d'un bus de terrain (22), la commande centrale électronique (21) permettant de commander les flux d'énergie de l'unité de production de courant primaire (10) et de l'unité de production de courant secondaire (9), et l'unité de production de courant primaire (10) et l'unité de production de courant secondaire (9) alimentant en énergie au moins un entraînement de roulement (16) et au moins un entraînement de levage (17), le générateur secondaire (24) étant réglable en vitesse de rotation par le système de régulation de processus (33) et le compresseur (30) étant réglable en vitesse de rotation par le biais du moteur électrique (31) et du système de régulation de processus (33).

2. Véhicule selon la revendication 1, **caractérisé en ce que** les vitesses de rotation du compresseur (30) et de la turbine à gaz d'échappement (26) sont commandées par le système de régulation de processus (33) de telle sorte que la pression ambiante règne dans le flux de gaz d'échappement (25) à l'entrée de la turbine à gaz d'échappement (26).

3. Véhicule selon la revendication 1 ou 2, **caractérisé en ce que** les vitesses de rotation du compresseur (30) et de la turbine à gaz d'échappement (26) sont commandées par le système de régulation de processus (33) de telle sorte qu'une pression ambiante règne dans le flux de gaz d'échappement (25) à la sortie de la turbine à gaz d'échappement (26).

4. Véhicule selon l'une au moins des revendications 1 à 3, **caractérisé en ce que** l'unité de production de courant secondaire (9) fonctionne selon le cycle de Brayton inversé (IBC).

5. Véhicule selon l'une au moins des revendications 1 à 4, **caractérisé en ce que** le moteur thermique primaire (7) est réalisé sous la forme d'un moteur à pistons ou d'une turbine.

6. Véhicule selon la revendication 5, **caractérisé en ce que** le moteur thermique primaire (7) utilise comme carburant du gaz naturel liquéfié cryogénique (GNL).

7. Véhicule selon l'une au moins des revendications 1 à 6, **caractérisé en ce que** le véhicule est une grue portuaire, une grue portuaire mobile, une grue portique sur pneus ou un chariot cavalier (1).
